# EUROPEAN PATENT APPLICATION

(11) **EP 1 104 973 A1**
(43) Date of publication of application: **06.06.2001**
(21) Application number: 99660186.0
(22) Date of filing: 03.12.1999
(51) Int. Cl.: H04Q 7/22, G07F 7/00

(54) **A method and a system for obtaining services using a cellular telecommunication system**

(71) Applicant: First Hop Oy, 02150 Espoo (FI)
(72) Inventor: Koponen, Petteri, 00330 Helsinki (FI); Räsänen, Juhana, 02710 Espoo (FI)
(74) Representative: Levlin, Jan Markus

(57) **Abstract**

The invention relates to methods and systems for allowing users of a cellular telecommunication system to obtain services, goods, or other benefits from a third party. The invention allows the user to order a token from a token issuing system, receive the token to his mobile communication means, and obtain a service, goods, or some other kind of benefit by communicating the token to a verifying system, which verifies the token and allows the user to obtain the desired service.

## Description

### BACKGROUND OF THE INVENTION

### 1. Field of the Invention

The invention relates to methods and systems for allowing users of a cellular telecommunication system to obtain services, goods, or other benefits from a third party. Especially, the invention is related to such a method as specified in the preamble of the independent method claim.

### 2. Description of Related Art

Presently the use of mobile communication means such as mobile phones is increasing rapidly. Various schemes for the use of electronic money have also been presented. Despite these technological developments, large amounts of various bits and pieces of paper such as tickets and vouchers are still used. For example, for obtaining a right to see a movie, a person needs to go and buy a paper ticket, often queuing for most popular shows. Some Internet sites of ticket agencies allow the purchase of tickets via the Internet, however, the paper tickets are then mailed to the customer. The applicants are not aware of solutions employing the advantages of mobile communication systems giving the same advantages as paper tickets, such as the possibility to distribute the tickets to a group of people, or the possibility to buy and obtain the tickets early, and use them later.

### SUMMARY OF THE INVENTION

An object of the invention is to realize a method and a system for obtaining and granting rights, which alleviates the problems of prior art.

The objects are reached by arranging a token issuing system to issue tokens associated with specific rights and transmit such tokens to mobile communication means of users, and arranging a verifying system to receive tokens from users and to grant rights associated with presented tokens.

The system for granting and obtaining rights according to the invention is characterized by that, which is specified in the characterizing part of the independent claim directed to a system for granting and obtaining rights. The verifying system according to the invention is characterized by that, which is specified in the characterizing part of the independent claim directed to a verifying system. The method according to the invention is characterized by that, which is specified in the characterizing part of the independent method claim. The computer program element according to the invention is characterized by that, which is specified in the characterizing part of the independent claim directed to a computer program element. The dependent claims describe further advantageous embodiments of the invention.

The invention allows the user to order a token from a token issuing system, receive the token to his mobile communication means, and obtain a service, goods, or some other kind of benefit by communicating the token to a verifying system, which verifies the token and allows the user to obtain the desired service.

### BRIEF DESCRIPTION OF THE DRAWINGS

The invention is described in more detail in the following with reference to the accompanying drawings, of which
Figure 1 illustrates the basic features of the invention,
Figure 2 illustrates a ticket printing system according to an advantageous embodiment of the invention,
Figure 3 illustrates a vending machine according to an advantageous embodiment of the invention,
Figure 4 illustrates a system for granting and obtaining rights according to an advantageous embodiment of the invention, and
Figure 5 illustrates a method according to an advantageous embodiment of the invention.

Same reference numerals are used for similar entities in the figures.

### DETAILED DESCRIPTION OF THE PREFERRED EMBODIMENTS

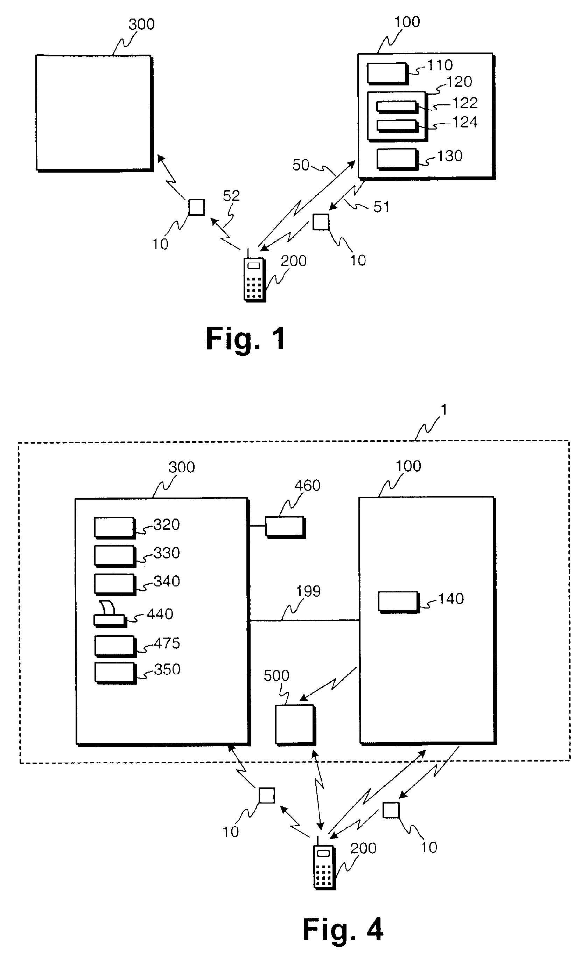

Figure 1 illustrates the general structure of the invention. Figure 1 shows a token issuing system 100, a mobile communication means 200, a token verification system 300 and tokens 10. The user of the mobile communication means 200 can use the invention by ordering 50 a certain token from the token issuing system, which produces a token 10 and transmits 51 the token to the mobile communication means. The user of the mobile communication means can then later use the token by effecting 52 the transfer of the token 10 to the token verification system, which receives and processes the token, and allows the user to obtain the benefit, right, or product associated with the token. In the following, the invention is discussed from various viewpoints generally, and with the help of more detailed descriptions of various advantageous embodiments of the invention.

### A. GENERAL DESCRIPTIONS OF CERTAIN FEATURES OF THE INVENTION

### A.1. ORDERING OF TOKENS

A user can order tokens 10 in many different ways, and can even receive tokens not specifically ordererd by himself. The user can send a text message such as an SMS message for ordering a token, whereafter the issuer sends a token to the requester, possibly billing the user for the token. The user can as well call a telephone number of the issuer of the token with his mobile communication means, whereafter the issuer of the token can recognize the telephone number of the user and send a token as an SMS message to the user. In some embodiments of the invention, tokens can also be ordered via an Internet site of a token issuer using a HTML browser program or email. Similarly, a token issuer can also set up a WAP (wireless application protocol) service, which can be used for obtaining tokens by users having WAP-enabled mobile communication means 200. An issuer of tokens can also send tokens to users without explicit orders from the users. This can be advantageous for example for advertising and marketing purposes.

### A.2. GENERATION OF TOKENS

Tokens 10 are generated by a token issuing system 100. The generation procedure of a token is naturally dependent on the type of the token. Different types of tokens are described later in this specification. Figure 1 illustrates the structure of a token issuing system according to an advantageous embodiment of the invention. In this embodiment tokens are encrypted and digitally signed, whereby a token issuing system 100 comprises means 110 for receiving token requests, means 120 for generating a token according to a received token request, and means 130 for sending a generated token to the requester. In a further advantageous embodiment of the invention, the means 120 for generating a token comprise means 122 for encrypting a token and means 124 for digitally signing a token. These means 110, 120, 122, 124, and 130 can advantageously be implemented using software executed by the processor unit of the token issuing system.

The token issuing system can also generate tokens without explicit ordering by the user of the token. For example, the operator of the token issuing system can produce tokens with the system, and distribute produced tokens to users for example for promotional purposes. The generation of tokens can also be triggered by other events than receiving of an explicit request of an user or a request of the operator of the token issuing system. Examples of such other events are other transactions such as payments or purchases fulfilling certain criterions, or for example entering of a user to certain area in the cellular network.

### A.3. TRANSMITTING OF A TOKEN TO A MOBILE COMMUNICATION MEANS

A token can be transmitted to a mobile communication means in many different ways. Since a token is a sequence of bits, a token can be transmitted to a mobile communication means basically using any method capable of transmitting a string of bits to the mobile communication means.

For example, in the present GSM networks an advantageous method is to use the short message service (SMS) to transfer tokens. In such an embodiment, the token can be encoded in a text message (SMS message) in many different ways. The encoding method naturally depends on the intended method of transferring the token from the mobile communication means to a verifying system. For example, in such an embodiment of the invention in which the token is transferred to a verifying system acoustically using a special alarm sound, the SMS message is preferably encoded in a way used in the prior art to transmit alarm sounds with SMS messages. If the user needs to transfer the token to a verifying system by using a keyboard, the token is preferably encoded using a short alphanumerical string.

The tokens can be transferred to a mobile communication means by email, if the mobile communication means is able to receive email. Further, a token can be transmitted to a mobile communication means with a pager network, if the mobile communication means is able to receive paging messages of a pager network.

In such embodiments, in which the mobile communication means is able to act as a terminal in a packet data network such as the GPRS network (general packet radio service), the token can be transferred in a single data packet, or for example using a specific packet protocol. In the example of the GPRS network, the token can be transmitted to the mobile communication means using a single IP (internet protocol) packet. Other protocols on top of the IP protocol can also be used to transmit tokens. For example, in the case that tokens are transmitted by email, they can be transmitted using the SMTP protocol (simple mail transfer protocol).

In a further advantageous embodiment, the token is transmitted to the mobile communication means over a speech channel. In such an embodiment, the token needs to be encoded in an audio signal which can be transmitted over the speech channel. A man skilled in the art can encode a string of bits in an audio signal in many ways. For example, if the token is encoded using constant length notes with eight different signal frequencies, three consecutive bits of the token can be transmitted using one such note. DTMF signalling (dual tone multi frequency) can also be used. The received audio signal can be transferred directly to a token verification system, for example by holding the mobile communication means in close proximity to a microphone of the token verification system. In such embodiments in which the mobile communication means comprises means for recording speech signals, these recording means can be used to record the audio signal, which can then be played back later to a token verification system.

### A.4. TRANSFERRING OF A TOKEN FROM A MOBILE COMMUNICATION MEANS TO A VERIFYING SYSTEM

Tokens can be transferred from a mobile communication means to a verifying system in many different ways in various embodiments of the invention.

In an advantageous embodiment of the invention, the user of the mobile communication means types the token on a keypad of the verifying system. In such an embodiment, the token is preferably a relatively short numerical or alphanumerical string, which is short enough to facilitate easy typing without errors.

In such embodiments, the token needs to be transmitted to the mobile communication means in such a way that the mobile communication means is able to display the token as a numerical or alphanumeric string on the display of the mobile communication means. Preferably, the token is transmitted in such an embodiment by short text messages or email messages.

In some further advantageous embodiments of the invention the token is transferred from the mobile communication means to the verifying system by optical means. For example, in an advantageous embodiment of the invention the verifying system comprises a scanning or image capture device for reading information on a display of the mobile communication means.

The verifying system can obtain an image of the display of the mobile communication means and use character recognition technology to interpret the contents of the display, i.e. the token shown as a sequence of characters on the display. In such an embodiment, the verifying system comprises a digital camera for obtaining the images. Such an embodiment has the advantage, that it only requires that the mobile communication means is able to display a character string transmitted to the mobile communication means, which means that virtually any GSM phone can be used in such an embodiment.

The verifying system can also recognize other shapes than characters from the display of the mobile communication means, such as predefined shapes designed for easy recognition. For that purpose, the communication means needs to be able to display such shapes. Such functionality is present already in some GSM phones at the time of writing this application, which phones have the capability of showing an image transmitted to the GSM phone as a specially encoded SMS message.

In one advantageous embodiments, the mobile communication means displays the token as a bar code on the display of the mobile communication means. Such an embodiment has the advantage that bar code readers typically used in point of sale equipment can be used to read the token instead of a more complicated and expensive camera and recognizing software approach. For that purpose, the communication means needs to be able to display bar codes, or simply images comprising the bar codes. Such functionality is present already in some GSM phones at the time of writing this application, which phones have the capability of showing an image transmitted to the GSM phone as a specially encoded SMS message. If such an image comprises a bar code, such a GSM phone is able to display the bar code.

In a further advantageous embodiment of the invention, the token is transferred using an optical link such as an infrared link between the mobile communication means and the verifying system. Such an embodiment has the advantage that the link is very simple and cheap to implement. Infrared links are also already present in many cellular phones at the time of writing of this application.

In a further advantageous embodiment of the invention, a local radio link is used for transferring a token between a mobile communication means and a verifying system. Such a radio link can be implemented in many different ways as a man skilled in the art knows.

In particularly advantageous embodiments of the invention, the token is transferred between the mobile communication means and a verifying system using acoustical means, such as using the alarm signal generating device or a loudspeaker of the mobile communication means to transmit the token, a microphone of the verifying system to receive the token, and a signal processing means of the verifying system to decode the acoustically transmitted and received token. In such embodiments, the audio signal for transferring the token to the verifying device can be generated either in the token issuing system, or in the mobile communication means. In the former case, the token is transmitted to the mobile communication means via a speech channel as an audio signal. The received audio signal can be transferred directly to a token verification system, for example by holding the mobile communication means in close proximity to a microphone of the token verification system. In such embodiments in which the mobile communication means comprises means for recording speech signals, these recording means can be used to record the audio signal, which can then be played back later to a token verification system.

In such embodiments of the invention, in which the audio signal is generated in the mobile communication means, the alarm signal generator, a loudspeaker, or the earpiece of the mobile communication means can be used to generate the audible signal. In a especially advantageous embodiment of the invention, an alarm signal of the mobile communication means is used to transfer a token. In such an embodiment the mobile communication means needs to be able to receive alarm signals encoded for example in a SMS message. Several GSM phone models already comprise such functionality at the time of writing of this patent application. According to the present embodiment, the token is encoded in the information describing a new alarm sound to the mobile communication means. After reception of such information, the user of the mobile communication means is able to transfer the token to a verification system by playing the newly received alarm sound near a microphone of a verification system.

A particular advantage of acoustical transmission of tokens is the simplicity of implementation of such an acoustical link. Many already existing GSM phones have the capability of receiving alarm sounds encoded in SMS messages, and virtually all mobile phones are capable of reproducing an audio signal transmitted to the phone via a speech channel. Further, an audio signal is easy to receive and decode, which simplifies the construction of a verifying system. A conventional microphone and an amplifier suffices to receive the audio signal, and signal processing circuitry for decoding an audio signal is also straightforward to produce for a man skilled in the art. For example, DTMF (dual tone multi frequency) signalling can be used for transmitting the token. Circuits for generation and decoding of DTMF signals are easily obtainable and cheap.

### B. DETAILED DESCRIPTION OF CERTAIN FEATURES OF THE INVENTION

### B.1. TOKEN

A token is a piece of information associated with a right, i.e. a service or some other type of benefit which a verifying system is authorized to allow to a party presenting a token. A piece of information can be represented in many different ways, such as a string of bits directly stating the value of the token or in encoded form such as a string of characters or as an audio signal. The actual contents of the token can as well be constructed in many different ways in various embodiments of the invention.

In an advantageous embodiment of the invention, the token is an identifier of a right, i.e. the contents of the token have no other specific meaning than that of being associated with a right. In such an embodiment, the verifying system needs to have access to a memory means listing allowed identifiers and the description of rights corresponding to the particular identifier, if the verifying system is arranged to grant more than one different rights depending on the token presented to the system. Further, in such an embodiment the verifying system fetches a description of rights from the memory means on the basis of the received token, and proceeds to grant the user the benefits and rights described in the description of rights. For example, if the verifying system is a self-service ticket printer system at a movie theatre, the ticket printer could receive the string "asDsCX005" from the mobile phone of the user, use the string to obtain the description of the right associated with the string, such as "two tickets for 19.00 show of the newest James Bond film", proceed to print the two corresponding tickets, and mark the tickets as printed in the memory means comprising the information about tokens and associated rights.

If the verifying system is arranged to grant only one specific right, it suffices that the verifying system compares the token to a predetermined identifier stored within the verifying system. The identifier may for example be a random string of characters. In such an embodiment, the right to be granted is already known by the verifying system, wherefore there is no need for explicit identification of the desired right by the token.

In an advantageous embodiment of the invention, the identifier of the right i.e. the value of a token is a result of a calculation performed on a string describing the right associated with the identifier. The calculation can for example be the calculation of a checksum or a hash value.

In a further advantageous group of embodiments of the invention, the token comprises the description of the right conveyed by the token. In such embodiments, the verifying system examines the contents of the token, and proceeds to grant the user the benefits and rights described in the token. For most practical applications, the token must be encrypted and/or digitally signed to prevent any attempts to produce false tokens by malicious users. Many different encryption methods can be used in various embodiments of the invention, and a man skilled in the art can easily implement many different methods. The encryption method should be sufficiently strong with regard to the commercial value of the benefit or right conveyed by the token. In one advantageous embodiment, public-key cryptography is used to encrypt the contents of the tokens. In such an embodiment, the token issuing system encrypts the contents of the token with its secret key, and the token is decrypted by the verification system using the public key of the token issuing system. If the verification system is able to decrypt the token using the public key of the token issuing system, the verification system can safely assume that the token was created by the token issuing system. In another embodiment, the token issuing system creates a digital signature of the token, and transmits the signature together with the token. Upon receiving the token and the signature, the verification system verifies the signature, and if the signature is acceptable, the user presenting the token is granted the benefits or rights described in the token. Such digital signature creation and verification can be effected for example using public key cryptography. In one advantageous embodiment of the invention the token issuing system calculates a checksum or a hash value of the token and encrypts the checksum or the hash value using the private key of the issuing system, the result of the encryption being the digital signature. When the verification system receives the token and the signature, it decrypts the signature using the public key of the issuing system, performs the same calculation as the issuing system, and compares the calculated and decrypted values. If the values match, the token can be safely assumed as being created by the token issuing system and as being unmodified during transmission. Such an embodiment has the advantage, that the contents of the token can also serve as a title or a name of the token, i.e. describe for the user which benefit or right is conveyed by the token. In a further advantageous embodiment of the invention, in addition to the digital signature, the contents of the token are encrypted as well.

The token may comprise many different types of information in different embodiments of the invention. The token can comprise the name or identifier of the right, such as for example "ticket", "right to enter through this door", or "candy bar". Further, the token can comprise the identifier of a verifying system, in which case only that verifying system allows the user to obtain the benefit associated with the token. The token can also comprise the identifier of the token issuing system. The token can also comprise an identifier identifying the user. For example, the identifier identifying the user can comprise the subscriber number of the mobile communication means which the user used in ordering the token. In such an embodiment, the verifying system can store the user identifier, which can be used for subsequent billing of the user.

In such embodiments of the invention in which the token is used for obtaining a printed ticket, the token can comprise a part or all of the text printed on the ticket. In a further embodiment of the invention, the token comprises a complete description of the contents of the printed ticket for example as an image or in a page layout language such as PostScript or PCL, whereby the design and graphics of the printed ticket can be determined completely by the token. This allows the same ticket printer system to be used for printing tickets for a plurality of services.

The token can also comprise information specifying certain conditions which must be met when using the token. One example of such a condition is a validity period, which states the time period during which the token must be used. The validity period can be a single validity perod, such as "valid for the next 10 minutes after token ordering time of 13:42", or for example a repeating validity period, such as "every day 08:00 - 16:00". Other conditions according to a particular implementation of the invention can also be stated.

The token can also specify the number of rights conferred by the token. One token can for example be used a certain number of times. For example, a user can obtain a token as a serial ticket to a movie theater, in which case the ticket printer system of the movie theater accepts the token for the printing of, say, five tickets. The buyer of such a token can then pass the token to a group of people, and the first five persons to present the token to the ticket printing system obtain a ticket.

In a further advantageous embodiment, the token can also confer partial rights. For example, the verifying system can require two different tokens to be passed, before allowing entry via a specific door. Such a system could be used for example for security control of high security areas, allowing certain visitors having a token to pass through a door only with the company of another person such as a guard presenting his token to the verifying system. Methods for creating such partial rights are well known and are described in detail for example in the IETF documents RFC 2692 and RFC 2693 describing the SPKI system.

Many different kinds of rights or benefits can be associated with a token. In an advantageous embodiment of the invention, a token can be used as an entrance ticket to a show, a movie, a theatre play, a museum, or for example an exhibition. A token can be presented at the entrance to the event, or for example to a ticket printing system connected to a verifying system in order to obtain a ticket for the event. In such an embodiment, in which the user presents a token to a ticket printing system and obtains a corresponding ticket, the user can obtain any benefit which can be obtained using some kind of a ticket. Further, a token can be used as a ticket for transportation, such as a bus or a train ticket. A token can also be used as a seat reservation ticket in a train, for example. A token can be used as a voucher as well, for example for the payment of a single trip in a taxi or a night in a hotel, in which case the token needs to contain enough information about the issuer of the token in order for the taxi company or the hotel to bill the issuer. A token can also be used as a key or an authorization to enter specific parts of buildings. Further, a token can also be used as payment for parking of vehicles. For example, a parking coupon printing system can comprise a verification system, whereby users can present a token to the parking coupon printing system for obtaining a parking coupon. For parking places and parking garages having gates at the exit, a verification system can be installed in the gate opening system, whereby the users can present a token to the gate opening system in order to open the gate instead of effecting payment through conventional means. In such an embodiment, a shop can send tokens to its customers allowing free parking for promotional purposes, or a cashier of a shop send a token to each customer whose purchases exceed a specified limit. Similarly, a company can send tokens allowing parking in nearby parking garages for its employees and visitors. A company might send a one-time token to a visitor, but a token corresponding to a monthly parking permit to an employee. Any other services can as well be associated with a token. For example, a shop in a shopping mall might send a token allowing the customer to have a free lunch at a local fast-food restaurant, if the purchases of the customer exceed a specified limit. A shop might as well send tokens associated with promotional offerings, various dicounts and other benefits for regular customers. The previous uses of a token were only examples, and the invention is not limited in any way to these examples.

### B.2. TOKEN VERIFYING SYSTEM

A verifying system can be implemented in many different systems according to various embodiments of the invention. For example, a verifying system can be a part of or be connected to a ticket printer system, a vending machine, an automated gate, or some other automated device.

Further, in one embodiment of the invention the verifying system is connected to a smart card writer system able to write information into smart cards. In such an embodiment, the right associated with the token is information to be written on a smart card. Such information may be for example a bus ticket, a number of bus tickets, or for example a monthly ticket. Such an embodiment can be used for sale and distribution of tickets for users of a smart card based ticket system, for example. Such a smart card writing system can be installed for general use at bus stations, for example.

As discussed previously in this specification, description of the right associated with a token can be stored in a database accessible to the verifying system, or the description may be included within the token, whether encrypted totally, in part, or not at all. However, the invention is not limited to these two embodiments, since in some advantageous embodiments of the invention a part of the description may be in the token, and another part in the database. The database may also comprise other types of information associated with the token as the description of the right associated with the token. For example, the database can comprise a password or a PIN number (personal identification number) which the user must input to the verification system in addition to the token. Such a password or a PIN can also be included in the token itself in encrypted form.

A verifying system can in some embodiments of the invention be arranged as a stand-alone system without connections to other systems. A stand-alone system cannot check, if a token presented to it has been presented to other verification systems or not. In such embodiments, it is preferable that the number of times a token is presented to the stand alone verifying system is irrelevant, or that the particular verifying system is the only verifying system accepting those tokens that can be used at the site.

In further embodiments of the invention, a plurality of verifying units are interconnected. Such a configuration is advantageous in such a site, where there are a plurality of verifying systems, all of which can accept token valid at the site. In such an embodiment, the verifying systems can check, if a particular token has already been presented to another verifying system at the site.

### B.3. TOKEN STORAGE SERVICE

According to a further advantageous embodiment of the invention, a token storage system is provided. The token storage system can store a plurality of tokens of a plurality of users. A user can store tokens he has obtained from various token issuing systems in a token storage system, and later retrieve a token from the token storage system to his mobile communication means.

Such a token storage system is advantageous, if the user does not wish to store all his tokens in a mobile communication means. Further, such a token storage system allows a user to obtain tokens via other means than the mobile communication means. For example, a user can obtain tokens from an Internet site using a personal computer, and store the tokens in his own account in the token storage system. The user can then later fetch a token from the token storage system into his mobile communication means, and use the token. In an advantageous embodiment of the invention, the token storage system comprises a WAP (wireless application protocol) interface or a HTML (hypertext markup language) interface, which allows the user to browse the contents of his account on the token storage system with a WAP- or Internet-enabled mobile communication means. Preferably, the token storage system stores the tokens in unencoded form, and the user can choose, in which form he wishes to obtain the tokens: in an SMS message, encoded as alarm signal information in an SMS message, or any other form. The form in which the token is transmitted to the mobile communication means can also be dependent on the method the user uses to contact the token storage system: if the user places a speech call to the token storage system, the token storage system preferably encodes the token in an audio signal and transmits the audio signal to the mobile communication means over the speech channel.

### B.4. BILLING ISSUES

Many different methods can be used in various embodiment of the invention for billing the user for the service or right conveyed by a token, in such applications of the invention in which billing is necessary. In certain embodiments of the invention, the billing of the user is effected when the user orders the token. Such an approach can be easily implemented for example when the token issuing system issues tokens based on requests sent as a SMS message, in which case the cost of the token is added to the telephone bill of the subscriber sending the request SMS message. Similarly, when the token is obtained via a speech channel, the cost of the token can as well be added to the telephone bill of the user. In certain other embodiments of the invention, the billing is effected on the basis of usage of the tokens, i.e. the billing is effected only after a token is presented to a verifying system. In such an embodiment, information about used tokens need to be collected from verifying systems in order to enable the operator of the token issuing system to bill the user. Such an embodiment allows distribution of tokens to a potentially large group of people without need to pay for such tokens that remain unused. Such an embodiment is advantageous for example when a company wishes to offer a free movie to employees and distributes multiple copies of a token valid only for the particular movie, whereafter the movie theatre bills the company only for the actually used tokens. Many different ways for effecting a billing mechanism are easily devised by a man skilled in the art, and the invention is not limited to any particular method of effecting the billing of the user. Further, in some embodiments of the invention, a verifying system is arranged to accept both prepaid tokens and tokens requiring subsequent billing.

### C. CERTAIN PARTICULARLY ADVANTAGEOUS EMBODIMENTS OF THE INVENTION

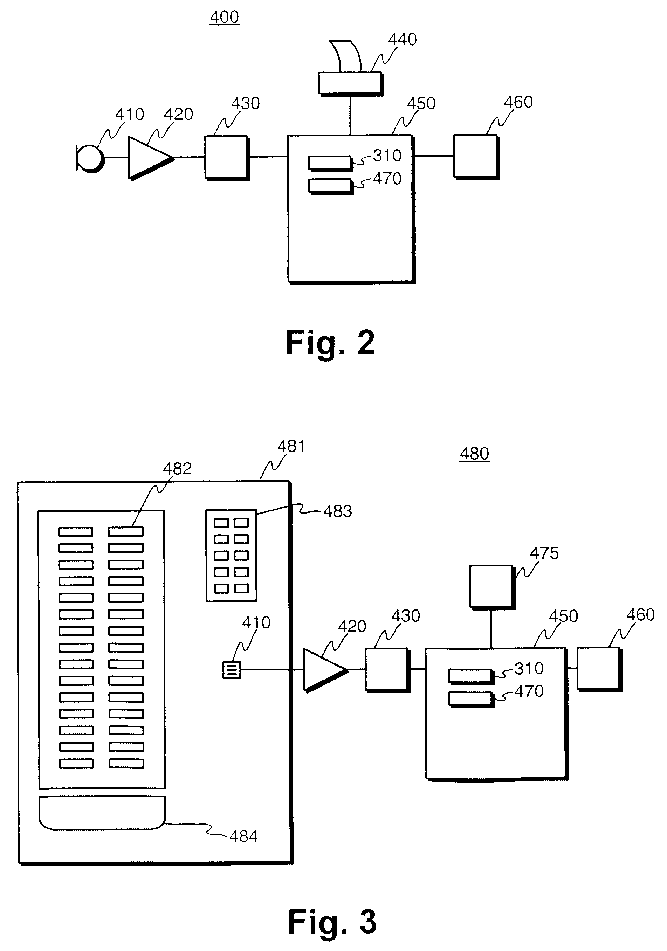

In the following, some particularly advantageous embodiments of the invention are described. According to a particularly advantageous embodiment of the invention, a ticket printer system is provided, which ticket printer system comprises functionality of a verifying system. The ticket printer system is illustrated in figure 2. The ticket printer system 400 is arranged to receive tokens from mobile communication means via acoustical means. For that purpose, the ticket printer system comprises a microphone 410 and an amplifier 420 for receiving audio signals and a signal processing unit 430 for decoding received audio signals. For printing tickets, the ticket printer system comprises a printer 440. The operation of the ticket printer system is controlled by a control unit 450. The ticket printer system further comprises a memory means 460 for storing information about received tokens and for storing programs directing the functioning of the ticket printing system. The ticket printing system further comprises means 310 for verifying received tokens, and means 470 for controlling the printing of tickets. According to this embodiment, the verifying means 310 is arranged to receive and accept encrypted and signed tokens issued by certain token issuing systems. The verifying means 310 is arranged to decrypt an encrypted token using the secret key of the ticket printer system, and verify the digital signature of the token issuing system. After decryption, the ticket printer system prints one or more tickets according to the contents of the token. The ticket printer system 400 is arranged to store public keys of those token issuing systems, whose tokens the ticket printer system accepts. The ticket printer system can be used in any application, in which printed tickets are exchanged for goods, services, and other benefits. Examples of such applications are ticket printer systems for printing vehicle tickets, movie tickets, service coupons, and discount coupons.

Figure 3 shows another particularly advantageous embodiment of the invention. In this embodiment, a vending machine comprising a verifying system is provided. Figure 3 shows a vending machine 480, having an user interface 481, products 482 to be dispensed, product selection buttons 483, and a dispensing bin 484. The products can be for example for candy bars, tobacco, or other products. The vending machine 480 is arranged to receive tokens from mobile communication means via acoustical means. For that purpose, the vending machine comprises a microphone 410 and an amplifier 420 for receiving audio signals and a signal processing unit 430 for decoding received audio signals. For dispensing products, the vending machine comprises a dispensing mechanism 475, which is arranged to drop products 482 to dispensing bin 484. The operation of the vending machine is controlled by a control unit 450. The vending machine further comprises a memory means 460 for storing information about received tokens and for storing programs directing the functioning of the vending machine. The vending machine further comprises means 310 for verifying received tokens, and means 470 for controlling the dispensing of products. According to this embodiment, the verifying means 310 is arranged to receive and accept encrypted and signed tokens issued by certain token issuing systems. The verifying means 310 is arranged to decrypt an encrypted token using the secret key of the vending machine, and verify the digital signature of the token issuing system. After decryption, the vending machine dispenses one or more products according to the contents of the token. The vending machine 480 is arranged to store public keys of those token issuing systems, whose tokens the vending machine accepts. Figure 3 only shows one example of a vending machine, and the invention is not limited to such vending machines as shown in figure 3. The invention can be applied to any other known vending machines as well, for example to such systems in which the user can open a door after payment or transferring of a token, and pick the product he likes.

The systems of figures 2 and 3 can be both used in a similar way. The user can for example obtain a token encoded as a SMS message describing a new alarm sound, and later play the sound at the microphone system of figure 2 or 3 to obtain a ticket or a product. The user can also place a telephone call to a telephone number of a token issuing system, and place his mobile phone near the microphone 410, whereby the token issuing system transfers a token encoded in audio signals via the mobile phone to the verifying system of the ticket printer or vending machine. There may be more than one telephone numbers listed on the system, each number corresponding to a given ticket or product or a type of tickets or products.

The systems of figures 2 and 3 can in further embodiments of the invention also comprise any and/or all means described as being a part of various types of verifying systems described in the present specification.

### D. FURTHER ADVANTAGEOUS EMBODIMENTS OF THE INVENTION

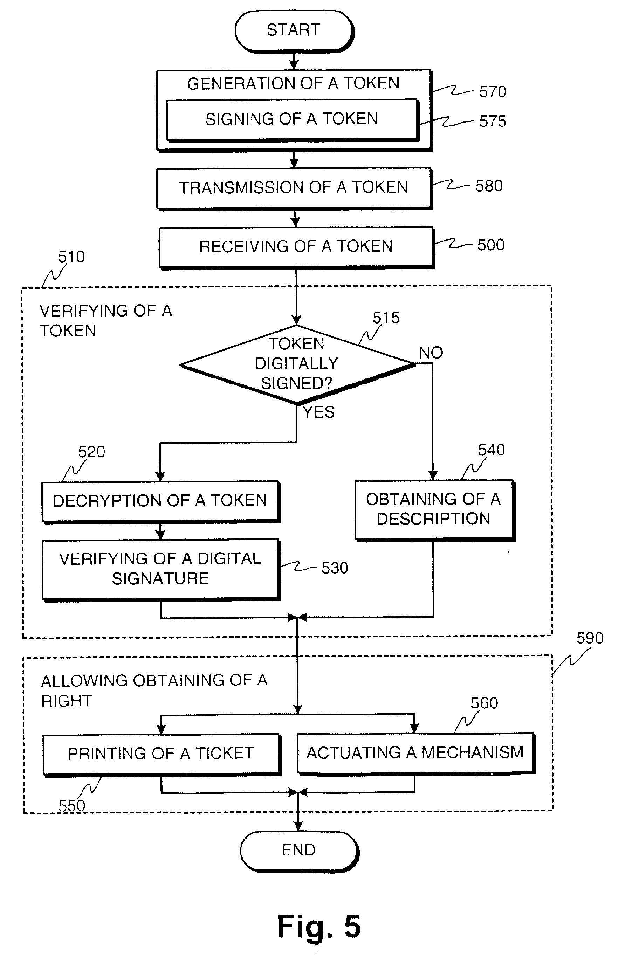

Figure 4 illustrates a particularly advantageous embodiment of the invention. According to this embodiment a system 1 for granting and obtaining rights is provided. The system comprises a token issuing system 100 for issuing tokens 10 associated with specific rights, means for transmission 140 of tokens to mobile communication means, and a verifying system 300 for receiving tokens from mobile communication means and for verifying received tokens. The means for transmission 140 of tokens to mobile communication means can for example comprise means for generation of a SMS message and for transmission of the SMS message to a cellular telephony system.

According to a further advantageous embodiment, the system for granting and obtaining rights comprises in the verifying system means 320 for decrypting an encrypted token.

According to a further advantageous embodiment, the system for granting and obtaining rights comprises in the verifying system means 330 for verifying a digital signature.

According to a further advantageous embodiment, the system for granting and obtaining rights comprises a memory means 460 for storing descriptions of rights associated with tokens, and in the verifying system, means for obtaining 340 a description of a right from said memory means on the basis of a received token.

The memory means 460 can advantageously be a part of the verifying system, i.e. an internal memory means of the verifying system. However, in various embodiments of the invention, the memory means 460 can also be a part of the token issuing system 100, in which case the verifying system 300 needs to have a communication link with the memory means 460.

According to a further advantageous embodiment, the system comprises in the verifying system means 460 for printing a ticket.

According to a further advantageous embodiment, the system comprises in the verifying system means 475 for dispensing a product.

According to a further advantageous embodiment, the system comprises in the verifying system means for receiving a token presented as an acoustical signal. Such means can be for example a microphone 410, an amplifier 420, and a signal processing means 430.

According to a further advantageous embodiment, the system comprises in the verifying system means 350 for receiving a token optically. The means 350 for receiving a token presented optically can for example comprise a phototransistor and signal processing means for receiving infrared optical signals, or for example a bar code scanner.

According to a further advantageous embodiment, the verifying system and the token issuing system are connected via a communication link 199. This communication link can in various embodiments of the invention be used for example for transmission of tokens and corresponding descriptions of rights from the token issuing system 100 to a memory means of the verifying system. Further, this communication link 199 can also be used for transferring information about used tokens from the verifying system to the token issuing system.

According to a further advantageous embodiment, the verifying system is a stand-alone system. In such an embodiment, the verifying system is not connected via any hardwired link to the issuing system.

According to a further advantageous embodiment, the system further comprises means 500 for storing tokens generated for a user. In such an embodiment, the means 500 for storing tokens generated for a user provides token storage services as described previously.

According to a further aspect of the invention, a verifying system is provided. According to this aspect of the invention, the verifying system comprises means for receiving a token, means 310 for verifying a token, and means 440, 475 for allowing a user to obtain the right associated with the token.

According to a further advantageous embodiment, the verifying system further comprises means 410, 420, 430 for receiving a token presented as an acoustical signal.

According to a further advantageous embodiment, the verifying system further comprises means 350 for receiving a token optically.

According to a further advantageous embodiment, the verifying system further comprises means 320 for decrypting an encrypted token.

According to a further advantageous embodiment, the verifying system further comprises means 330 for verifying a digital signature.

According to a further advantageous embodiment, the verifying system further comprises a memory means 460 for storing descriptions of rights associated with tokens, and means for obtaining 340 a description of a right from said memory means on the basis of a received token. The means 320, 330, 340, and 350 can advantageously be implemented as software executed by a processor unit of the verifying system 300.

According to a further advantageous embodiment, the verifying system further comprises means 440 for printing a ticket.

According to a further advantageous embodiment, the verifying system further comprises means 475 for dispensing a product.

According to a further advantageous embodiment, the verifying system is a ticket printer system 400.

According to a further advantageous embodiment, the verifying system is a vending machine 480.

According to a further aspect of the invention, a method for granting and obtaining rights is provided. According to this aspect, the method comprises at least the steps of receiving 500 a token associated with a right, verifying 510 the received token, and allowing 590 a user to obtain the right associated with the token.

According to a further advantageous embodiment of the invention, the method further comprises at least the step of decrypting 520 a token. The step of decrypting 520 a token is in certain embodiments of the invention a part of the step of verifying 510 the received token, as shown in figure 5.

According to a further advantageous embodiment of the invention, the method further comprises at least the step of verifying 530 a digital signature in a received token. The step of verifying 530 a digital signature is in certain embodiments of the invention a part of the step of verifying 510 the received token, as shown in figure 5.

According to a further advantageous embodiment of the invention, the method further comprises at least the step of obtaining 540 from a memory means on the basis of a received token a description of the right associated with the token.

In an advantageous embodiment of the invention, the method further comprises the step 515 of checking, whether the received token is digitally signed. If the received token is digitally signed, then step 520 is performed if necessary, after which step 530 is performed. If the received token is not digitally signed, then a description of of the right associated with the token is obtained from a memory means on the basis of the token. However, this is only one example of an advantageous embodiment of the invention, and does not limit the invention in any way. For example, in other embodiments of the invention in which no digital signing and encryption of tokens are used, the contents of the token are used as a direct description of the right associated with the token. Digital signing and encryption might not be necessary to avoid misuse by malicious users, if the tokens are for example transferred as encoded in audio signals, which are not easy to fabricate by a user without knowledge of the encoding used and the technical means to do it.

According to a further advantageous embodiment of the invention, said step 590 of allowing comprises at least the step of printing 550 a ticket.

According to a further advantageous embodiment of the invention, said step 590 of allowing comprises at least the step 560 of actuating a mechanism.

According to a further advantageous embodiment of the invention, the method further comprises at least the steps of generation 570 of a token, and transmission 580 of the generated token to a user.

According to a further advantageous embodiment of the invention, said step 570 of generation comprises at least the step 575 of digitally signing a description of a right.

According to an even further aspect of the invention, a computer program element for a system for granting and obtaining rights is provided. According to this aspect of the invention, the computer program element comprises at least computer program code means for receiving a token, computer program code means for verifying a token, and computer program code means for allowing a user to obtain the right associated with the token.

The computer program element can in various embodiments of the invention be provided as an independent application program, a program library for creation of systems for granting and obtaining rights, such programs or program libraries embodied on a computer readable medium, such as on a CD-ROM disc, or for example such programs or program libraries encoded on a carrier such as a data stream in a computer network.

In a further advantageous embodiment of the invention, the computer program element comprises computer program code means for interpreting a token received as an acoustical signal. Such computer program code means can be arranged for example to interpret DTMF signals contained in a digital data stream obtained from a microphone and a analog-to-digital converter.

In a further advantageous embodiment of the invention, the computer program element comprises computer program code means for interpreting a token received as an optical signal. Such computer program code means can be arranged for example to recognize characters or other shapes from an image of a display.

In a further advantageous embodiment of the invention, the computer program element comprises computer program code means for decrypting an encrypted token.

In a further advantageous embodiment of the invention, the computer program element comprises computer program code means for verifying a digital signature.

In a further advantageous embodiment of the invention, the computer program element comprises computer program code means for storing descriptions of rights associated with tokens, and computer program code means for obtaining a description of a right from said means for storing on the basis of a token.

In a further advantageous embodiment of the invention, the computer program element comprises computer program code means for controlling the printing of a ticket.

In a further advantageous embodiment of the invention, the computer program element comprises computer program code means for controlling the dispensing of a product.

### E. FURTHER CONSIDERATIONS

The present invention has several advantages. The invention allows the separation of the events of obtaining a right to do something and of using the right as is the case with conventional paper tickets. Many of the previously described embodiments do not require changes in presently existing mobile phones, i.e. many embodiments of the invention can be used with mobile phones, which are already on mass market at the time of writing of this patent application.

In the previous examples, the token issuing system and the token verification system were shown as being separate systems. However, in various embodiments of the invention, the token issuing system and the token verification system can be connected by a communication link for transferring information about tokens such as which tokens have been presented to the verification system. In some embodiments of the invention at least a part of the functionality of a token issuing system and a token verification system are implemented in the same physical device such as a computer.

The mobile communication means 200 can be a mobile phone, a mobile data terminal, a multifunctional mobile phone, or for example a mobile phone combined with PDA (personal digital assistant) functionality.

In the accompanying claims, the term right is intended to cover any right or benefit obtainable with the presentation of a ticket or a token, such as for example a right to see a show, obtain a product, enter a specific area, an so on.

In view of the foregoing description it will be evident to a person skilled in the art that various modifications may be made within the scope of the invention. While a preferred embodiment of the invention has been described in detail, it should he apparent that many modifications and variations thereto are possible, all of which fall within the true spirit and scope of the invention.

## Claims

1. A system for granting and obtaining rights, **characterized** in that the system comprises
- a token issuing system for issuing tokens associated with specific rights,
- means for transmission of tokens to mobile communication means, and
- a verifying system for receiving tokens from mobile communication means and for verifying received tokens.

2. A system according to claim 1, **characterized** in that
the system comprises in the verifying system means for
decrypting an encrypted token.

3. A system according to claim 1, **characterized** in that
the system comprises in the verifying system means for
verifying a digital signature.

4. A system according to claim 1, **characterized** in that
the system comprises
- a memory means for storing descriptions of rights associated with tokens, and
- in the verifying system, means for obtaining a description of a right from said memory means on the basis of a received token.

5. A system according to claim 1, **characterized** in that
the system comprises in the verifying system means for
printing a ticket.

6. A system according to claim 1, **characterized** in that
the system comprises in the verifying system means for
dispensing a product.

7. A system according to claim 1, **characterized** in that
the system comprises in the verifying system means for receiving a token presented as an acoustical signal.

8. A system according to claim 1, **characterized** in that
the system comprises in the verifying system means for receiving a token optically.

9. A system according to claim 1, **characterized** in that
the verifying system and the token issuing system are connected via a communication link.

10. A system according to claim 1, **characterized** in that
the verifying system is a stand-alone system.

11. A system according to claim 1, **characterized** in that
the system further comprises means for storing tokens generated for a user.

12. A verifying system, **characterized** in that the verifying system comprises
- means for receiving a token,
- means for verifying a token, and
- means for allowing a user to obtain the right associated with the token.

13. A verifying system according to claim 13, **characterized** in that
it comprises means for receiving a token presented as an acoustical signal.

14. A verifying system according to claim 13, **characterized** in that
it comprises means for receiving a token optically.

15. A verifying system according to claim 13, **characterized** in that
it comprises means for decrypting an encrypted token.

16. A verifying system according to claim 13, **characterized** in that
it comprises means for verifying a digital signature.

17. A verifying system according to claim 13, **characterized** in that it comprises
a memory means for storing descriptions of rights associated with tokens, and
means for obtaining a description of a right from said memory means on the basis of a received token.

18. A verifying system according to claim 13, **characterized** in that it comprises means for printing a ticket.

19. A verifying system according to claim 13, **characterized** in that it comprises means for dispensing a product.

20. A verifying system according to claim 13, **characterized** in that
the verifying system is a ticket printer system.

21. A verifying system according to claim 13, **characterized** in that
the verifying system is a vending machine.

22. A method for granting and obtaining rights, **characterized** in that
it comprises at least the steps of
- receiving a token associated with a right,
- verifying the received token, and
- allowing a user to obtain the right associated with the token.

23. A method according to claim 23, **characterized** in that
it further comprises at least the step of
verifying a digital signature in a received token

24. A method according to claim 23, **characterized** in that
it further comprises at least the step of
decrypting a token.

25. A method according to claim 23, **characterized** in that
it further comprises at least the step of
obtaining from a memory means on the basis of a received token a description of the right associated with the token.

26. A method according to claim 23, **characterized** in that
said step of allowing comprises at least the step of
printing a ticket.

27. A method according to claim 23, **characterized** in that
said step of allowing comprises at least the step of
actuating a mechanism.

28. A method according to claim 23, **characterized** in that
it further comprises at least the steps of
generation of a token, and
transmission of the generated token to a user.

29. A method according to claim 29, **characterized** in that
said step of generation comprises at least the step of
digitally signing a description of a right.

30. A computer program element for a system for granting and obtaining rights,
**characterized** in that it comprises
- computer program code means for receiving a token,
- computer program code means for verifying a token, and
- computer program code means for allowing a user to obtain the right associated with the token.

31. A computer program element according to claim 31, **characterized** in that
it comprises computer program code means for interpreting a token received as an acoustical signal.

32. A computer program element according to claim 31, **characterized** in that
it comprises computer program code means for interpreting a token received as an optical signal.

33. A computer program element according to claim 31, **characterized** in that
it comprises computer program code means for decrypting an encrypted token.

34. A computer program element according to claim 31, **characterized** in that
it comprises computer program code means for verifying a digital signature.

35. A computer program element according to claim 31, **characterized** in that
it comprises
- computer program code means for storing descriptions of rights associated with tokens, and
- computer program code means for obtaining a description of a right from said means for storing on the basis of a token.

36. A computer program element according to claim 31, **characterized** in that
it comprises computer program code means for controlling the printing of a ticket.

37. A computer program element according to claim 31, **characterized** in that
it comprises computer program code means for controlling the dispensing of a product.

38. A computer program element as claimed in claim 31 embodied on a computer readable medium.

## Amended claims

### Amended claims in accordance with Rule 86(2) EPC.

**1.** A system for granting and obtaining rights, **characterized** in that the system comprises
- a token issuing system for issuing tokens associated with specific rights,
- means for transmission of tokens to mobile communication means, and
- a verifying system for receiving tokens from mobile communication means and for verifying received tokens.

**2.** A system according to claim 1, **characterized** in that
the system comprises in the verifying system means for
decrypting and encrypted token.

**3.** A system according to claim 1, **characterized** in that
the system comprises in the verifying system means for
verifying a digital signature.

**4.** A system according to claim 1, **characterized** in that
the system comprises
- a memory means for storing descriptions of rights associated with tokens, and
- in the verifying system, means for obtaining a description of a right from said memory means on the basis of a received token.

**5.** A system according to claim 1, **characterized** in that
the system comprises in the verifying system means for
printing a ticket.

**6.** A system according to claim 1, **characterized** in that
the system comprises in the verifying system means for
dispensing a product.

**7.** A system according to claim 1, **characterized** in that
the system comprises in the verifying system means for receiving a token presented as an acoustical signal.

**8.** A system according to claim 1, **characterized** in that
the system comprises in the verifying system means for receiving a token optically.

**9.** A system according to claim 1, **characterized** in that
the verifying system and the token issuing system are connected via a communication link.

**10.** A system according to claim 1, **characterized** in that
the verifying system is a stand-alone system.

**11.** A system according to claim 1, **characterized** in that
the system further comprises means for storing tokens generated for a user.

**12.** A verifying system, **characterized** in that the verifying system comprises
- means for receiving a token,
- means for verifying a token, and
- means for allowing a user to obtain the right associated with the token.

**13.** A verifying system according to claim 12, **characterized** in that
it comprises means for receiving a token presented as an acoustical signal.

**14.** A verifying system according to claim 12, **characterized** in that
it comprises means for receiving a token optically.

**15.** A verifying system according to claim 12, **characterized** in that
it comprises means for decrypting an encrypted token.

**16.** A verifying system according to claim 12, **characterized** in that
it comprises means for verifying a digital signature.

**17.** A verifying system according to claim 12, **characterized** in that it comprises
a memory means for storing descriptions of rights associated with tokens, and
means for obtaining a description of a right from said memory means on the basis of a received token.

**18.** A verifying system according to claim 12, **characterized** in that it comprises means for printing a ticket.

**19.** A verifying system according to claim 12, **characterized** in that it comprises means for dispensing a product.

**20.** A verifying system according to claim 12, **characterized** in that
the verifying system is a ticket printer system.

**21.** A verifying system according to claim 12, **characterized** in that
the verifying system is a vending machine.

**22.** A method for granting and obtaining rights, **characterized** in that
it comprises at least the steps of
- receiving a token associated with a right,
- verifying the received token, and
- allowing a user to obtain the right associated with the token.

**23.** A method according to claim 22, **characterized** in that
it further comprises at least the step of
verifying a digital signature in a received token

**24.** A method according to claim 22, **characterized** in that
it further comprises at least the step of
decrypting a token.

**25.** A method according to claim 22, **characterized** in that
it further comprises at least the step of
obtaining from a memory means on the basis of a received token a description of the right associated with the token.

**26.** A method according to claim 22, **characterized** in that
said step of allowing comprises at least the step of
printing a ticket.

**27.** A method according to claim 22, **characterized** in that
said step of allowing comprises at least the step of
actuating a mechanism.

**28.** A method according to claim 22, **characterized** in that
it further comprises at least the steps of
generation of a token, and
transmission of the generated token to a user.

**29.** A method according to claim 28, **characterized** in that
said step of generation comprises at least the step of
digitally signing a description of a right.

**30.** A computer program element for a system for granting and obtaining rights,
**characterized** in that it comprises
- computer program code means for receiving a token,
- computer program code means for verifying a token, and
- computer program code means for allowing a user to obtain the right associated with the token.

**31.** A computer program element according to claim 30, **characterized** in that
it comprises computer program code means for interpreting a token received as an acoustical signal.

**32.** A computer program element according to claim 30, **characterized** in that
it comprises computer program code means for interpreting a token received as an optical signal.

**33.** A computer program element according to claim 30, **characterized** in that
it comprises computer program code means for decrypting an encrypted token.

**34.** A computer program element according to claim 30, **characterized** in that
it comprises computer program code means for verifying a digital signature.

**35.** A computer program element according to claim 30, **characterized** in that
it comprises
- computer program code means for storing descriptions of rights associated with tokens, and
- computer program code means for obtaining a description of a right from said means for storing on the basis of a token.

**36.** A computer program element according to claim 30, **characterized** in that
it comprises computer program code means for controlling the printing of a ticket.

**37.** A computer program element according to claim 30, **characterized** in that
it comprises computer program code means for controlling the dispensing of a product.

**38.** A computer program element as claimed in claim 30 embodied on a computer readable medium.
